# EUROPÄISCHE PATENTSCHRIFT

(11) **EP 1 365 168 B1**
(45) Veröffentlichungstag und Bekanntmachung des Hinweises auf die Patenterteilung: **30.08.2006**
(21) Anmeldenummer: 03008769.6
(22) Anmeldetag: 22.04.2003
(51) Int. Cl.: F16D 65/18

(54) **Scheibenbremse für Fahrzeuge, insbesondere Strassenfahrzeuge**
Disc brake for vehicles, in particular road vehicles
Frein à disque pour véhicules, en particulier véhicules routiers

(30) Priorität: 23.04.2002 DE 10218056
(43) Veröffentlichungstag der Anmeldung: 26.11.2003
(73) Patentinhaber: KNORR-BREMSE SYSTEME FÜR NUTZFAHRZEUGE GMBH, 80809 München (DE)
(72) Erfinder: Weggartner, Robert, 84367 Tann (DE); Siebke, Alf, 86938 Schondorf (DE); Ertl, Willi, 94474 Vilshofen (DE); Rott, Josef, 94501 Aidenbach (DE); Macke, Wlodzimierz, 82140 Olching (DE)
(74) Vertreter: Mattusch, Gundula

(56) Entgegenhaltungen:
- WO-A-97/21041
- DE-C- 19 946 680
- GB-A- 1 353 294
- US-A- 5 697 474

## Beschreibung

Die vorliegende Erfindung betrifft eine Scheibenbremse für Fahrzeuge, insbesondere Straßenfahrzeuge, mit einem Bremssattel, in dem eine durch ein Druckstück betätigbare Zuspanneinheit vorgesehen ist, wobei das Druckstück im wesentlichen in einem am Bremssattel angebrachten Betätigungszylinder aufgenommen ist und eine Dichtung an einer Öffnung zwischen dem Innenraum des Bremssattels und dem Innenraum des Betätigungszylinders vorgesehen ist wobei, die Dichtung am Bremssattel an einem aus korrosionsbeständigem Material bestehenden Zusatzelement festgelegt ist und das Zusatzelement eine die Öffnung zu dem Bremssattel verschließende Schutzkappe aufweist.

Aus der DE 43 14 720 A1 ist eine druckluftbetätigte Scheibenbremse bekannt, bei der in einem Bremssattel eine Zuspannvorrichtung zum Betätigen einer Scheibenbremse vorgesehen ist, wobei die Zuspannvorrichtung über eine in einem Betätigungszylinder aufgenommene Druckstange bewegbar ist. Um den Eintritt von Schmutz von dem Betätigungszylinder in den Bremssattel zu vermeiden, ist eine Dichtung in Form eines Faltenbalges zwischen dem Bremssattel und dem Betätigungszylinder eingeklemmt, wobei das gegenüberliegende Ende der Dichtung an der Druckstange festgelegt ist. Um eine Unterrostung der Dichtung zu verhindern, ist der im Bereich der Schnittstelle Bremssattel/Betätigungszylinder spanabhebend bearbeitete Bremssattel mit einer galvanischen Beschichtung versehen. Wegen der Verschmutzung im Bereich der Bremse, Vibrationen und elastischen Verformungen aufgrund hoher Belastungen ist die Gefahr der Undichte an dieser Stelle besonders hoch. Um das Eindringen von Wasser zwischen der Dichtung und der Satteloberfläche und das damit verbundene Unterrosten zu vermeiden, sorgt die Beschichtung für einen Schutz, ist allerdings aufwendig bei der Herstellung.

Während sich die Beschichtung bei Bremsen mit einem geteilten Bremssattel gemäß der DE 43 14 720 teilweise bewährt hat, gestaltet sich eine entsprechende Lösung bei einem einteilig ausgebildeten Bremssattel, wie er in der DE 195 15 063 C1 gezeigt ist, schon aus Gründen der Handhabung aufwendiger. Bei einem einteiligen Bremssattel gibt es neben Bereichen, bei denen eine Beschichtung notwendig ist, auch Bereiche, die ohne Beschichtung bleiben müssen, wie beispielsweise Gewindebohrungen und andere Bauelemente. Das Abdecken einzelner Bereiche beim Beschichten ist jedoch mit zusätzlichem Aufwand verbunden.

Ferner ist aus der gattungsbildenden WO 97/21041 eine Scheibenbremse bekannt, bei der an der Schnittstelle zwischen Bremssattel und Zylindergehäuse eine Scheibe gelagert ist, die sowohl am äußeren als auch am inneren Umfang ein Dichtelement aufweist. Die Dichtwirkung des äußeren Dichtelementes ist jedoch nur begrenzt, da nur eine geringe Abstützung des über die Scheibe hervorstehenden Bereiches vorhanden ist. Die innere Dichtung dient lediglich als Anlagefläche für einen Bremshebel. Bei der Montage besteht zudem das Problem, dass durch die Öffnung in der Scheibe Verunreinigungen in den Bremssattel eintreten können.

Schließlich ist aus der gattungsbildenden DE 199 46 680 eine Scheibenbremse bekannt, bei der eine mit Sollbruchstellen versehene Abdeckkappe am Bremssattel montiert ist. Diese Abdeckkappe ist in einer gesonderten Aufnahme am Bremssattel angeordnet und der Bereich zwischen den Gehäuseteilen im Bereich einer Dichtung an der Durchführung für das Druckstück ist ebenfalls nicht gegen Schäden durch Korrosion gesichert.

Es ist daher Aufgabe der vorliegenden Erfindung den Bereich der Dichtung zwischen Bremssattel und Betätigungszylinder gegen Unterrostung zu schützen, wobei auch schon bei der Montage der Eintritt von Verunreinigungen in den Bremssattel vermieden werden soll.

Diese Aufgabe wird mit einer Scheibenbremse mit den Merkmalen des Anspruches 1 gelöst.

Wenn das Zusatzelement zur Ausbildung eines Schutzes gegen Unterrostung einen ringförmigen Abschnitt aufweist, dessen Außendurchmesser mindestens genauso groß ist wie ein unterer Flanschabschnitt der Dichtung, ist die Dichtung von dem Zusatzelement derart umgeben, dass keine Feuchtigkeit zwischen Dichtung und Bremssattel eindringen kann. Denn das Zusatzelement bildet eine Barriere, in der der untere Flanschabschnitt der Dichtung eingebettet ist. In dem Bremssattel ist dabei lediglich eine Aussparung erforderlich, in der das Zusatzelement angeordnet ist, so dass in dem ringförmigen Bereich um die Durchtrittsöffnung für das Druckstück herum zwischen Dichtung und Bremssattel kein direkter Kontakt mehr besteht. Dadurch kann entweder die Beschichtung des Bremssattels vollständig entfallen oder der Bremssattel kann zuerst beschichtet und anschließend bearbeitet werden, wodurch das Abdecken der Flächen entfällt, die nicht beschichtet werden dürfen. Das Zusatzelement besitzt somit eine Doppelfunktion, nämlich einerseits den Schutz vor einem Unterrosten an dem Bremssattel und andererseits durch Ausbildung der Schutzkappe einen Schutz vor dem Verschmutzen bei der Montage.

Gemäß der Erfindung ist zwischen dem Bremssattel und dem Zusatzelement eine Gummischicht zur Abdichtung vorgesehen, so dass das Zusatzelement auf einfache Weise durch Einpressen oder Verkleben mit dem Bremssattel verbunden werden kann.

Für eine besonders gute Abdichtung weist das Zusatzelement eine metallische Ringscheibe mit einem am äußeren Umfang angeordneten Kragen zur Verbindung mit dem Bremssattel auf und zwischen dem Kragen und dem Bremssattel ist eine Gummischicht vorgesehen. Dadurch ist die Gummischicht durch den Kragen abgestützt und kann im komprimierten Zustand auch bei erheblichen Belastungen für eine dauerhafte Abdichtung sorgen. Der Kragen ist dabei bevorzugt beidseitig von einer Gummischicht umgeben.

Vorzugsweise weist das Zusatzelement auf der zum Betätigungszylinder gewandten Seite eine Gummischicht auf, die integral mit der Schutzkappe ausgebildet ist. Der Flanschabschnitt der Dichtung kann dann an der Gummischicht des Zusatzelementes klemmend festgelegt sein, so dass der Flanschabschnitt auf der zum Bremssattel gewandten Seite nur mit Gummi in Kontakt kommt. Selbst wenn Feuchtigkeit bis zu dem Bereich zwischen Dichtung und Zusatzelement eindringen sollte, kann noch keine schädliche Unterrostung auftreten, das die Gummischicht zusammen mit der Dichtung eine weitere Dichtungsbarriere für die Feuchtigkeit ausbilden.

Das Zusatzelement ist vorzugsweise zumindest bereichsweise in die Gummischicht einvulkanisiert und die Schutzkappe integral mit der Gummischicht ausgebildet. Zusatzelement und Schutzkappe bilden somit eine Baueinheit, die zusammen an dem Bremssattel festgelegt werden kann. Vorzugsweise weist die Schutzkappe an dem Zusatzelement einen Bereich mit geringerer Materialstärke auf, der bei der Montage des Druckstückes durchstoßen wird. Dadurch braucht die Schutzkappe nicht mühsam entfernet werden, sondern die Schutzschicht der Schutzkappe kann nach dem Durchstoßen im Bremssattel verbleiben.

Die Erfindung wird nachfolgend anhand von mehreren Ausführungsbeispielen mit Bezug auf die beigefügten Zeichnungen näher erläutert. Es zeigen:
- Fig. 1: eine geschnittene Ansicht eines ersten Ausführungsbeispieles einer erfindungsgemäßen Scheibenbremse;
- Fig. 2: eine geschnittene Detailansicht der Scheibenbremse der Fig. 1;
- Fig. 3: eine geschnittene Detailansicht eines zweiten Ausführungsbeispiels;
- Fig. 4: eine geschnittene Detailansicht eines dritten Ausführungsbeispiels;
- Fig. 5: eine geschnittene Detailansicht eines nicht zur Erfindung gehörenden Ausführungsbeispiels;
- Fig. 6: eine geschnittene Detailansicht des Ausführungsbeispiels der Fig. 5 bei der Montage;
- Fig. 7: eine geschnittene Detailansicht eines fünften Ausführungsbeispiels;
- Fig. 8: eine Unteransicht auf das Ausführungsbeispiel der Fig. 7;
- Fig. 9: eine Draufsicht auf das Ausführungsbeispiel der Fig. 7, und
- Fig. 10: eine geschnittene Detailansicht des Zusatzelementes der Fig. 7.

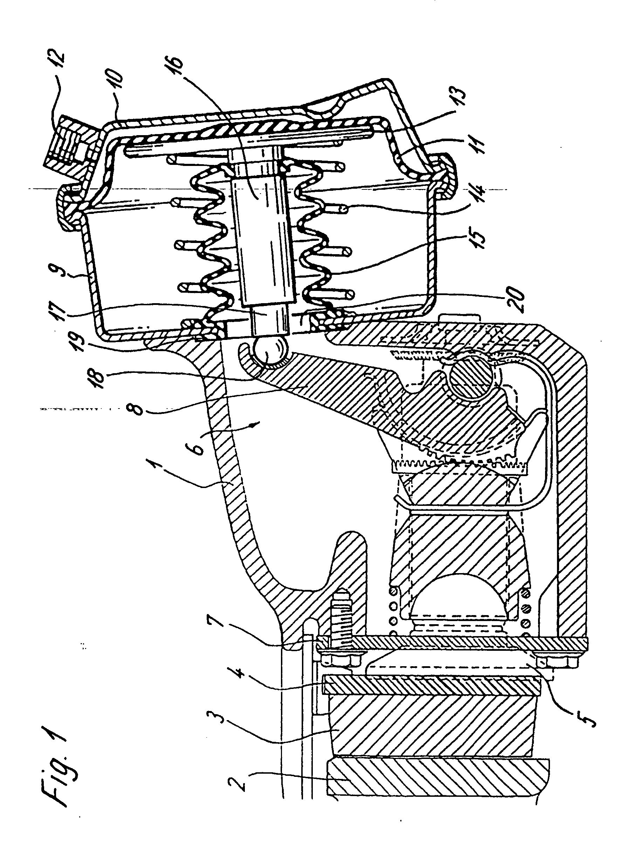

In Fig. 1 ist eine Scheibenbremse dargestellt, die einen Bremssattel 1 aufweist, der eine Bremsscheibe 2 umgreift. Zur Betätigung der Scheibenbremse ist eine Spannvorrichtung 6 vorgesehen, die über ein Druckstück 5 einen an einer Platte 4 montierten Bremsbelag 3 gegen die Bremsscheibe 2 drücken kann. Hierfür umfasst die Spannvorrichtung 6 einen Hebel 8, der über ein Druckstück verschwenkbar ausgebildet ist. Auf der zur Bremsscheibe 2 gewandten Seite ist der Bremssattel 1 mit einer Platte 7 verschlossen.

Am Bremssattel 1 ist ein Betätigungszylinder 9, 10 montiert, der aus zwei Gehäusehälften 9 und 10 gebildet ist. Innerhalb des Betätigungszylinders 9, 10 ist eine flexible Membran 11 montiert, so dass der Betätigungszylinder 9, 10 eine dem Bremssattel 1 zugewandte Innenkammer und eine dem Bremssattel 1 abgewandte Innenkammer aufweist. Die dem Bremssattel 1 abgewandte Innenkammer ist über einen Druckluftanschluss 12 mit Druck beaufschlagbar, um dann den Hebel 8 über das aus einer Kugel 18, einer ersten Druckstange 16 und einer zweiten Druckstange 17 gebildete Druckstück zu betätigen. Die mit einer Platte 13 versehene erste Druckstange 16 ist über ein Druckfeder 14 vorgespannt.

Um ein Eintreten von Schmutz von der dem Bremssattel 1 zugewandten Innenkammer des Betätigungszylinders 9, 10 in den Bremssattel 1 zu vermeiden, ist eine Dichtung 15 vorgesehen, die als Faltenbalg ausgebildet ist und auf der einen Seite mit einem Abschnitt 19 zwischen Bremssattel 1 und dem Betätigungszylinder 9 eingeklemmt ist sowie auf der gegenüberliegenden Seite an der ersten Druckstange 16 festgelegt ist.

In Fig. 2 ist die Befestigung der Dichtung 15 zwischen dem Betätigungszylinder 9 sowie dem Bremssattel 1 im Detail dargestellt. Der Bremssattel 1 umfasst eine Aussparung in der ein scheibenförmiges Zusatzelement 22 festgelegt ist. Das Zusatzelement 22 ist über eine aus Kleber bestehende Verbindungsschicht 23 an einem Vorsprung 24 am Bremssattel 1 festgelegt. Das Zusatzelement 22 kann beispielsweise als selbstklebender Ring aus Kunststoffolie ausgebildet sein. Auch andere Materialien, wie nicht rostender Stahl, Alu, beschichtetes Blech, Gummi, Kunststoff oder eine Kombination dieser Materialien können eingesetzt werden.

Ein Abschnitt der Dichtung 15 ist somit zwischen dem Betätigungszylinder 9 und dem Bremssattel 1 eingeklemmt und sorgt für eine dauerhafte Abdichtung dieser Schnittstelle. Durch das Zusatzelement 22 wird eine Unterrostung in diesem Bereich verhindert, da selbst wenn Feuchtigkeit zwischen dem Betätigungszylinder 9 und dem Bremssattel 1 eindringen sollte, eine weitere Ausbreitung der Feuchtigkeit durch das Zusatzelement 22 gestoppt wird.

In Fig. 3 ist eine weitere Ausführungsform eines in einer Aussparung 21 des Bremssattels 1 aufgenommenen Zusatzelementes 30 dargestellt, das einen ringscheibenförmigen Abschnitt und einen abgewinkelten Kragen 31 aufweist. Zwischen dem Kragen 31 und dem Bremssattel 1 ist eine Gummischicht 32 vorgesehen, so dass das beispielsweise aus einem korrosionsbeständigen Blech bestehende Zusatzelement 30 in den Bremssattel 1 eingepresst werden kann und somit einen Schutz vor Korrosion im Bereich der Schnittstelle zwischen Bremssattel 1 und Betätigungszylinder 9 bietet.

Bei dem in Fig. 4 gezeigten Ausführungsbeispiel weist der Bremssattel 1 keine Aussparung 21 auf, sondern lediglich eine durchgehende Öffnung 43. Das Zusatzelement 40 weist einen ringscheibenförmigen Abschnitt sowie einen Kragen 41 auf, der über eine Gummischicht 42 in den Bremssattel 1 eingepresst ist. Zum Durchführen der zweiten Druckstange 17 ist eine Öffnung 44 in dem Zusatzelement 40 ausgespart.

Bei dem in Fig. 5 gezeigten Ausführungsbeispiel ist ein Zusatzelement 50 vorgesehen, dass einen ringscheibenförmigen Abschnitt 51 sowie einen nach unten gebogenen Kragen 52 aufweist, der am inneren Umfang angeordnet ist. Die Festlegung des Zusatzelementes 50 erfolgt am Kragen 52, der unter Zwischenschaltung einer elastischen Dichtungsschicht 53 in den Bremssattel 1 eingepresst ist. Auch hierdurch wird eine Unterrostung durch den Eintritt von Feuchtigkeit durch das Zusatzelement 50 verhindert.

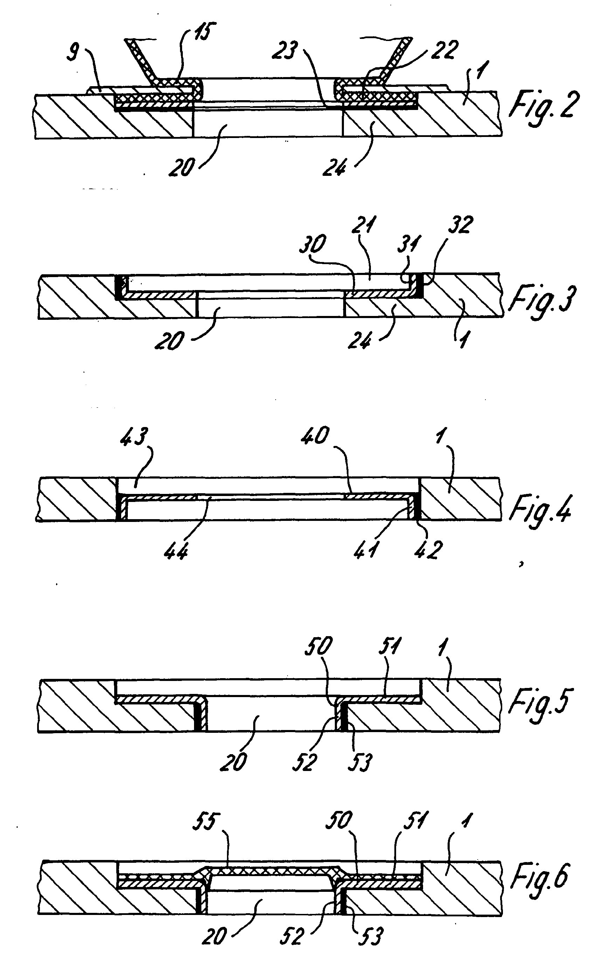

In Fig. 6 ist das in Fig. 5 gezeigte Ausführungsbeispiel während der Montage gezeigt. Das in dem Bremssattel 1 angeordnete Zusatzelement 50 ist mit einer zugehörigen Abdeckkappe 55 verschlossen, um den Eintritt von Schmutz in den Bremssattel 1 schon während der Montage zu verhindern. Die Kappe 55 kann beispielsweise mit einer Rastverbindung an dem Zusatzelement 50 festgelegt sein.

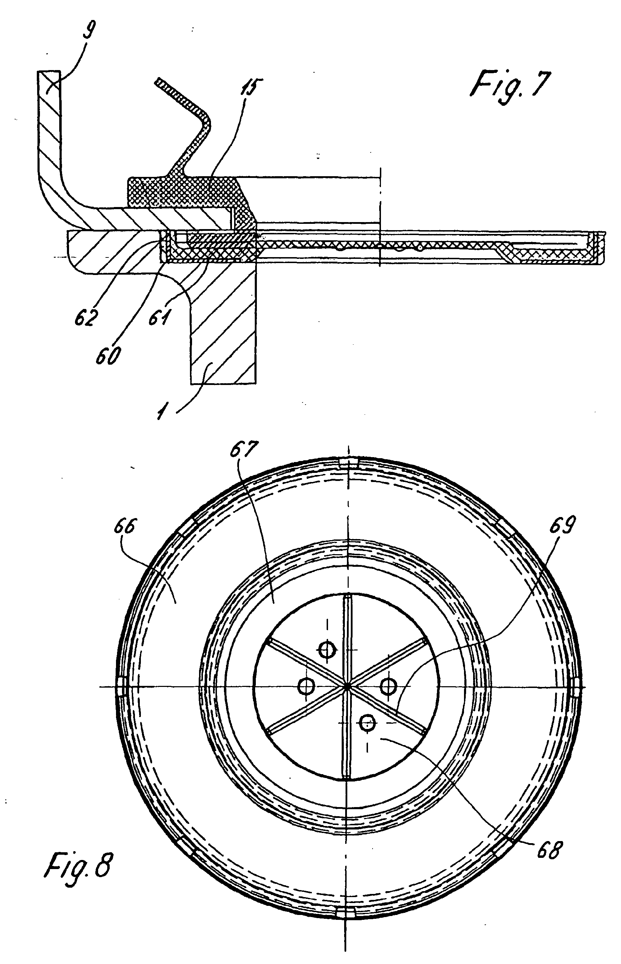

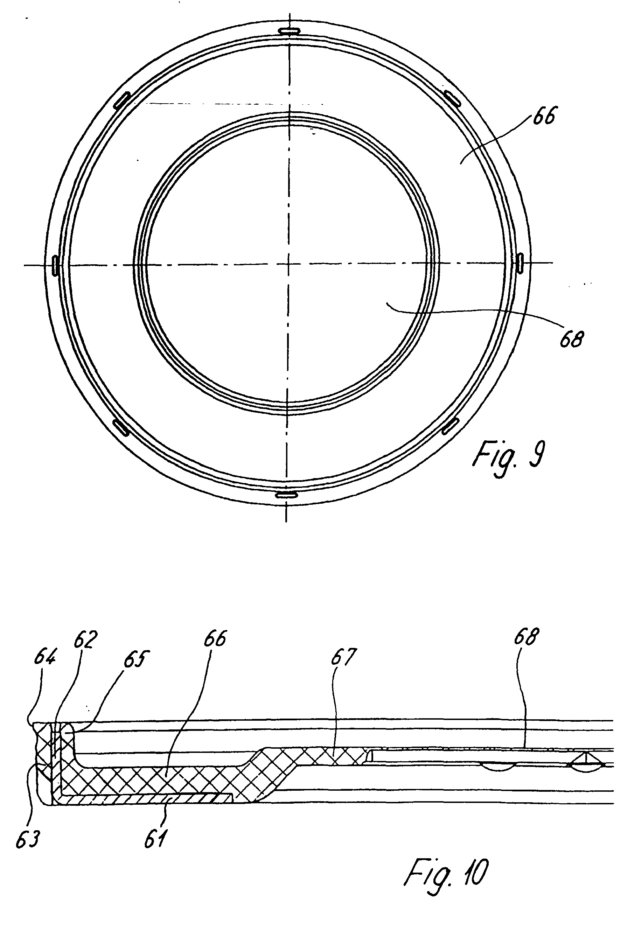

In Fig. 7 bis 10 ist ein weiteres Ausführungsbeispiel gezeigt, wobei ein Zusatzelement 60 in einer Schicht aus Gummi einvulkanisiert ist. Das Zusatzelement 60 umfasst einen ringförmigen Abschnitt 61 und einen senkrecht dazu ausgebildeten Kragen 62. Zwischen dem Kragen 62 und einer ringförmigen Innenwand an dem Bremssattel 1 ist eine Schicht 63 aus Gummi vorgesehen, die in der Dicke so bemessen ist, dass sie im eingebauten Zustand mit Presssitz in eine Aussparung des Bremssattels 1 eingepasst ist. Die äußere Umfangsfläche der Schicht 63 ist zur Erhöhung der Dichtigkeit gewellt ausgebildet. An der oberen Kante der Schicht 63 ist eine hervorstehende Dichtlippe 64 ausgebildet, die an dem Betätigungszylinder 9 anliegt. Auf der gegenüberliegenden Seite des Kragens 62 ist ebenfalls eine Dichtlippe 65 vorgesehen, die zu dem Betätigungszylinder 9 hervorsteht.

Der ringförmige Abschnitt 61 ist ebenfalls mit einer Schicht 66 aus Gummi überzogen, so dass der zu dem Bremssattel 1 weisende Abschnitt der Dichtung 15 nicht auf dem Zusatzelement 60 sondern auf er Schicht 66 aufliegt. Selbst wenn also bis zu der Dichtung 15 Feuchtigkeit eindringen sollte, dringt diese lediglich zu einem Bereich vor, in dem keine Unterrostung auftreten kann.

Integral mit der Schicht 66 ist eine kreisförmige Schutzkappe ausgebildet, die einen äußeren verdickten Bereich 67 und einen inneren Bereich 68 mit verminderter Materialstärke aufweist. Bei der Montage verhindert die Schutzkappe, dass Verunreinigungen in den Bremssattel 1 eindringen können. Bei der Montage bildet der innere Bereich 68 eine Sollbruchstelle, die von dem Druckstück einfach durchstoßen werden kann. In dem inneren Bereich 68 sind zusätzlich Profilierungen 69 vorgesehen, die einerseits optisch die Mitte für die Montage des Druckstückes anzeigen und andererseits beim Durchstoßen dafür sorgen, dass der Bereich 68 der Gummischicht definiert in mehrere Segmente aufgeteilt wird, die den Betrieb der Bremse nicht stören.

In den Fig. 2 bis 5 ist das Zusatzelement jeweils ohne Abdeckung dargestellt. Diese Zusatzelemente können jedoch entweder mit einer anvulkanisierten Gummischicht zur Bildung einer Schutzkappe wie bei dem letzten Ausführungsbeispiel versehen werden, oder es kann eine getrennt ausgebildete Schutzkappe montiert werden, so dass das Zusatzelement mehrteilig ausgebildet ist. Ferner können die einzelnen Ausführungsbeispiele miteinander kombiniert werden, da die Form des Zusatzelementes von der Form der Aussparung in dem Bremssattel abhängt, aber eine integral mit dem Zusatzelement ausgebildete Schutzkappe nicht von der Form des Zusatzelementes abhängt. Die Form des Zusatzelementes ist auch nicht auf die dargestellten Ausführungsbeispiele beschränkt. Es können andere Formen, die eine Abdichtung und einen Schutz gegen Unterrostung bieten, eingesetzt werden.

Ferner erfolgt in den dargestellten Ausführungsbeispielen die Betätigung des Hebels 8 und des Druckstückes über Druckluft. Alternativ kann das Druckstück auch mechanisch betätigt werden. Die gezeigte Abdichtung zwischen Bremssattel und Zylindergehäuse lässt sich allgemein für unterschiedliche Bremstypen einsetzen.

## Patentansprüche

1. Scheibenbremse für Fahrzeuge, insbesondere Straßenfahrzeuge, mit einem Bremssattel (1), in dem eine durch ein Druckstück (16, 17, 18) betätigbare Zuspanneinheit (6) vorgesehen ist, wobei das Druckstück (16, 17, 18) im wesentlichen in einem am Bremssattel (1) angebrachten Betätigungszylinder (9, 10) aufgenommen ist und eine Dichtung (15) an einer Öffnung (20) zwischen dem Innenraum des Bremssattels (1) und dem Innenraum des Betätigungszylinders (9, 10) vorgesehen ist, wobei die Dichtung (15) am Bremssattel (1) an einem aus korrosionsbeständigem Material bestehenden Zusatzelement (22, 30, 40, 50, 60) festgelegt ist, wobei das Zusatzelement (22, 30, 40, 50, 60) zur Ausbildung eines Schutzes gegen Unterrostung einen ringförmigen Abschnitt aufweist, dessen Außendurchmesser mindestens genauso groß ist wie ein unterer Flanschabschnitt (19) der Dichtung (15), **dadurch gekennzeichnet, dass** das Zusatzelement (22, 30, 40, 50, 60) eine die Öffnung zu dem Bremssattel (1) verschließende Schutzkappe (55, 67, 68) aufweist, und das Zusatzelement (22, 30,40, 60) eine metallische Ringscheibe mit einem am äußeren Umfang angeordneten Kragen (31, 41, 52, 62) zur Verbindung mit dem Bremssattel (1) aufweist und zwischen dem Kragen (31, 41, 52, 62) und dem Bremssattel (1) zur Abdichtung des Bereiches unterhalb des Zusatzelementes (22, 30, 40, 50, 60) eine Gummischicht (32, 63) vorgesehen ist.

2. Scheibenbremse n h Anspruch 1, **dadurch gekennzeichnet, dass** der Kragen (31, 41, 52, 62) beidseitig von einer Gummischicht (32, 42, 53, 63, 65) umgeben ist.

3. Scheibenbremse nach Anspruch 1 oder 2, **dadurch gekennzeichnet, dass** das Zusatzelement (22, 30, 40, 50 ,60) auf der zum Betätigungszylinder (9, 10) gewandten Seite eine Gummischicht (66) aufweist, die integral mit der Schutzkappe (66) ausgebildet ist.

4. Scheibenbremse nach einem der Ansprüche 1 bis 3, **dadurch gekennzeichnet, dass** der Flanschabschnitt (19) der Dichtung (15) an einer Gummischicht (66) des Zusatzelementes (22, 30, 40, 50, 60) klemmend festgelegt ist.

5. Scheibenbremse nach einem der Ansprüche 1 bis 4, **dadurch gekennzeichnet, dass** das Zusatzelement (22, 30, 40, 50, 60) in einer Aussparung (21, 43) am Bremssattel (1) eingeklebt und/oder eingepresst ist.

6. Scheibenbremse nach einem der Ansprüche 1 bis 5, **dadurch gekennzeichnet, dass** das Zusatzelement (22, 30, 40, 50, 60) einen inneren Ring (61, 62) aus Metall aufweist.

7. Scheibenbremse nach Anspruch 6, **dadurch gekennzeichnet, dass** der Ring (61, 62) aus Metall zumindest bereichsweise in die Gummischicht (66) einvulkanisiert ist.

## Claims

1. Disc brake for vehicles, in particular road vehicles, comprising a brake calliper (1) in which a brake applicator unit (6) is provided that is adapted for being operated by a pressure element (16, 17, 18), with said pressure element (16, 17, 18) being substantially received in an operating cylinder (9, 10) mounted on said brake calliper (1) and with a seal (15) being provided on an opening (20) between the interior of said brake calliper (1) and the interior of said operating cylinder (9, 10), wherein said seal (15) on said brake calliper (1) is fixed on an additional element (22, 30, 40, 50, 60) consisting of a corrosion-resistant material, with said additional element (22, 30, 40, 50, 60) presenting an annular section for providing protection from subsurface corrosion, which section has an outer diameter that is at least equal in size to a lower flange section (19) of said seal (15), **characterised in that** said additional element (22, 30, 40, 50, 60) comprises a protective cap (55, 67, 68) closing the opening towards said brake calliper (1), and that said additional element (22, 30, 40, 60) comprises a metal annular disc having a collar (31, 41, 52, 62) disposed on the outer periphery for connection to said brake calliper (1), and that a rubber layer (32, 63) is provided between said collar (31, 41, 652, 62) and said brake calliper (1) for sealing the zone underneath said additional element (22, 30, 40, 50, 60).

2. Disc brake according to Claim 1, **characterised in that** said collar (31, 41, 52, 62) is surrounded on both sides by a rubber layer (32, 42, 53, 63, 65).

3. Disc brake according to Claim 1 or 2, **characterised in that** said additional element (22, 30, 40, 50, 60) presents a rubber layer (66) on the side facing said operating cylinder (9, 10), which rubber layer is configured to be integral with said protective cap (66).

4. Disc brake according to any of the Claims 1 to 3, **characterised in that** said flange section (19) of said seal (15) is fixed with clamping action on a rubber layer (66) of said additional element (22, 30, 40, 50, 60).

5. Disc brake according to any of the Claims 1 to 4, **characterised in that** said additional element (22, 30, 40, 50, 60) is adhesively bonded in and/or pressed into a recess (21, 43) on said brake calliper (1).

6. Disc brake according to any of the Claims 1 to 5, **characterised in that** said additional element (22, 30, 40, 50, 60) comprises an inner ring (61, 62) made of metal.

7. Disc brake according to Claim 6, **characterised in that** said ring (61, 62) made of metal is vulcanised, at least in certain parts, into said rubber layer (66).

## Revendications

1. Frein à disque pour véhicules, en particulier véhicules routiers, comprenant un étrier de frein (1) dans lequel une unité de mise de frein (6) est pourvu, qui est apte à être actionnée par un élément presseur (16, 17, 18), audit élément presseur (16, 17, 18) étant essentiellement reçu dans un cylindre de commande (9, 10) monté audit étrier de frein (1) et à une garniture d'étanchéité (15) étant disposée sur une ouverture (20) entre l'intérieur dudit étrier de frein (1) et l'intérieur dudit cylindre de commande (9, 10), dans lequel ladite garniture d'étanchéité (15) audit étrier de frein (1) est fixé à un élément supplémentaire (22, 30, 40, 50, 60) composé d'un matériau résistant à la corrosion, audit élément supplémentaire (22, 30, 40, 50, 60) présentant une partie annulaire afin d'assurer la protection contre la corrosion sous surface, laquelle partie présente un diamètre extérieur au moins de la même grandeur qu'une partie inférieur de collerette (19) inférieure de ladite garniture d'étanchéité (15), **caractérisé en ce que** ledit élément supplémentaire (22, 30, 40, 50, 60) comprend un capot protecteur (55, 67, 68) fermant l'ouverture vers ledit étrier de frein (1), et **en ce que** ledit élément supplémentaire (22, 30, 40, 60) comprend un disque annulaire métallique à un collet (31, 41, 52, 62) disposé à la périphérie extérieure pour le raccord audit étrier de frein (1), et **en ce qu'**une couche en caoutchouc (32, 63) est disposée entre ledit collet (31, 41, 652, 62) et ledit étrier de frein (1) afin de rendre étanche la zone au-dessous dudit élément supplémentaire (22, 30, 40, 50, 60).

2. Frein à disque selon la revendication 1, **caractérisé en ce que** ledit collet (31, 41, 52, 62) est entouré, des deux côtés, par une couche en caoutchouc (32, 42, 53, 63, 65).

3. Frein à disque selon la revendication 1 ou 2, **caractérisé en ce que** ledit élément supplémentaire (22, 30, 40, 50, 60) présente une couche en caoutchouc (66) du côté en face dudit cylindre de commande (9, 10), qui est configurée d'une telle façon, qu'elle soit intégrale dans ledit capot protecteur (66).

4. Frein à disque selon une quelconque des revendications 1 à 3, **caractérisé en ce que** ladite partie de collerette (19) de ladite garniture d'étanchéité (15) est fixé, par action de serrage, sur une couche en caoutchouc (66) dudit élément supplémentaire (22, 30, 40, 50, 60).

5. Frein à disque selon une quelconque des revendications 1 à 4, **caractérisé en ce que** ledit élément supplémentaire (22, 30, 40, 50, 60) est collé et/ou pressé dans un creux (21, 43) dans ledit étrier de frein (1).

6. Frein à disque selon une quelconque des revendications 1 à 5, **caractérisé en ce que** ledit élément supplémentaire (22, 30, 40, 50, 60) comprend un anneau intérieur (61, 62) fait en métal.

7. Frein à disque selon la revendication 6, **caractérisé en ce que** ledit anneau (61, 62) fait en métal est vulcanisé, au moins en parties définies, dans ladite couche en caoutchouc (66).
